# EUROPÄISCHE PATENTANMELDUNG

(11) **EP 1 344 956 A1**
(43) Veröffentlichungstag der Anmeldung: **17.09.2003**
(21) Anmeldenummer: 02005722.0
(22) Anmeldetag: 13.03.2002
(51) Int. Cl.: F16F 9/04, B60G 17/052, B60G 11/27

(54) **Pneumatische Federungs- und Dämpfungsvorrichtung**

(71) Anmelder: Continental Aktiengesellschaft, 30165 Hannover (DE)
(72) Erfinder: Behmenburg, Christof, Dr., 31867 Lauenau (DE); Job, Heinz, 31535 Neustadt (DE); Märtens, Michael, Dr., 30161 Hannover (DE)

(57) **Zusammenfassung**

Pneumatische Federungs- und Dämpfungsvorrichtung (100), insbesondere für Fahrzeuge, welche vorzugsweise im oberen Bereich karosseriefest und im unteren Bereich an einer Radaufhängung befestigbar ist, enthaltend mindestens zwei mit Druckgas gefüllte, über einen Luftanschluss (134) an eine Druckgasquelle angeschlossene, hermetisch abgeschlossene und jeweils in ihrem Volumen veränderbare Luftfedern (101, 102), welche jeweils mittels einer von einem Roll- oder Faltenbalg gebildeten beweglichen Wand (116, 124) umschlossen werden und jeweils auf einer Abrollkontur abrollen und über ein in zwei Richtungen durchströmbares Drosselorgan (108) in Verbindung stehen, wobei die Luftfedern (101, 102) übereinander angeordnet sind, und die Abrollkontur der ersten Luftfeder (101) durch die zweite Luftfeder (102) derart vorgegeben wird, dass die erste Luftfeder (101) über der zweiten Luftfeder (102) abrollt. Ein Verbindungselement des oberen Deckels (104) der ersten Luftfeder (101) mit dem Abrollkolben (128) der zweiten Luftfeder (102) verläuft außerhalb der beiden Luftfedern (101, 102).

## Beschreibung

Gemäß dem Oberbegriff des Anspruchs 1 betrifft die Erfindung eine pneumatische Federungs- und Dämpfungsvorrichtung, insbesondere für Fahrzeuge, welche vorzugsweise im oberen Bereich karosseriefest und im unteren Bereich an einer Radaufhängung befestigbar ist, enthaltend mindestens zwei mit Druckgas gefüllte, über einen Luftanschluss an eine Druckgasquelle anschließbare, hermetisch abgeschlossene und jeweils in ihrem Volumen veränderbare Luftfedern, welche jeweils eine von einem Rolloder Faltenbalg gebildete bewegliche Wand enthalten und jeweils auf einer Abrollkontur abrollen und über ein in zwei Richtungen durchströmbares Drosselorgan in Verbindung stehen, und wobei die Luftfedem übereinander angeordnet sind und die Abrollkontur der ersten Luftfeder durch die zweite Luftfeder derart vorgegeben wird, dass die erste Luftfeder über der zweiten Luftfeder abrollt, und wobei ein oberer Deckel der ersten Luftfeder über ein Verbindungselement mit einem Abrollkolben der zweiten Luftfeder in Verbindung steht, und ein Deckel der zweiten Luftfeder mit einem Befestigungselement in Verbindung steht.

Eine pneumatische Federungs- und Dämpfungsvorrichtung der eingangs genannten Art ist z.B. aus der EP 0516129 B 1 (D1) bekannt. Die aus dieser Druckschrift bekannte Vorrichtung zur Dämpfung von Schwingungen ist zwischen einem fahrzeugfesten Aufhängungsglied und einem radfesten Aufhängungsglied betreibbar und verwendet ein elektrorheologisches Strömungsmittel als Dämpfungsmedium. Die Vorrichtung weist eine kürzere axiale Höhe als die vorbekannten Federungs- und Dämpfungsvorrichtungen auf. Die kürzere, axiale Höhe wird dadurch erreicht, dass zwei Strömungsmittelräume übereinander angeordnet sind, wobei die Abrollkontur der ersten, oberen Luftfeder von der Außenkontur der zweiten, unteren Luftfeder vorgegeben wird. Die Strömungsmittelräume sind jeweils von elastischen Wänden unter Ausbildung von gleich orientierten Rollfalten dicht umschlossen und stehen über eine in beiden Richtungen durchströmbare Drossel in Verbindung. Ein oberer Deckel des ersten, oberen Strömungsmittelraumes steht mit einem Abrollkolben des zweiten, unteren Strömungsmittelraumes über eine Kolbenstange des Stoßdämpfers in Verbindung. An dem Abrollkolben des zweiten, unteren Strömungsmittelraumes ist ein Stoßfänger angebracht, welcher sich bei fast vollständiger Einfederung der Federungs- und Dämpfungsvorrichtung an einem radfesten Gehäuse abstützt. Der obere fahrzeugkarosseriefeste Deckel des ersten, oberen Strömungsmittelraumes weist ein volumenkompensierendes Glied auf, welches sich bei fast vollständiger Einfederung der Federungs- und Dämpfungsvorrichtung am Deckel des zweiten, unteren Strömungsmittelraumes abstützt. Der Deckel des zweiten, unteren Strömungsmittelraumes steht über ein mit Aussparungen versehenes Gehäuse mit einer radfesten Befestigungshalterung eines Fahrzeuges in Verbindung. Die Verschwenkbarkeit der Federungs- und Dämpfungsvorrichtung der Druckschrift D1 des fahrzeugkarosseriefesten Endes gegenüber dem radfesten Ende dieser ist relativ gering, da das Schwenklager der Federungs- und Dämpfungsvorrichtung aus Festigkeitsgründen nicht beliebig weich und elastisch ausgeführt werden kann. Durch die weit auseinanderliegenden Führungselemente und damit sehr lange Führung der Kolbenstange des Stoßdämpfers der Federungs- und Dämpfungsvorrichtung, baut diese relativ lang. Ausserdem entsteht zwischen diesen Führungselementen und der Kolbenstange eine unerwünschte Reibung, insbesondere wenn zusätzliche Querkräfte wirken.

Weiterhin beschreibt die DE-OS 24 06 835 (D2) eine Federungs- und Dämpfungsvorrichtung mit Luftdämpfung. Bei der aus dieser Druckschrift bekannten Federungs- und Dämpfungsvorrichtung stehen ein Federungsraum, der sich mittels eines Rollbalges beim Einfedern verkleinert und beim Ausfedern vergrössert, und ein Dämpferraum, welcher mittels eines Rollbalges in seinem Volumen veränderlich ist, über ein in beiden Richtungen durchströmbares Drosselorgan in Verbindung. Das in seinem Querschnitt H-fömige Gehäuse der Federungs- und Dämpfungsvorrichtung ist fest mit dem Fahrzeugrahmen verbunden. Die jeweiligen Abrollkolben der Federungs- und Dämpfungsräume stützen sich gegen die jeweiligen oberen und/oder unteren Querlenker der Radaufhängung ab. Diese Ausführung einer Federungs- und Dämpfungsvorrichtung mit dem im Querschnitt H-förmigen Gehäuse führt zu einer aufwendigen Konstruktion der Radaufhängung, insbesondere der fahrzeugaufbaufesten Verbindung, und zu einem erhöhten Bauraumbedarf. Die Federungs- und Dämpfungsvorrichtung kann daher herkömmliche Federungs- und Dämpfungsvorrichtungen, bestehend zum Beispiel aus einer Luftfeder und einem hydraulischen Stoßdämpfer, welche üblicherweise im oberen Bereich fest am Fahrzeugaufbau und im unteren Bereich mit einer Befestigungsvorrichtung an einer Radaufhängung befestigt sind, ohne besondere Anpassungen am Fahrzeug bezüglich der Radaufhängung, der fahrzeugaufbaufesten Anbindung und des Bauraumes nicht ersetzen.

Aufgabe der Erfindung ist es, eine für ein Fahrzeug geeignete Vorrichtung zu schaffen, deren Bauraum gering ist und die ohne konstruktiven Mehraufwand in den Bauraum von herkömmlichen Federungs- und Dämpfungsvorrichtungen eingebaut werden kann und keine - insbesondere trockene - Reibung aufweist, welche zu akustischen Problemen führen kann.

Diese Aufgabe wird erfindungsgemäß durch die kennzeichnenden Merkmale des Anspruchs 1 gelöst. Ein Verbindungselement des oberen Deckels der ersten Luftfeder mit dem Abrollkolben der zweiten Luftfeder verläuft außerhalb der beiden Luftfedern.

Die erste (obere) Luftfeder wird zum Einbau der Federungs- und Dämpfungsvorrichtung in ein Fahrzeug, zum Beispiel über einen oberen Deckel, mit der Karosserie des Fahrzeuges verbunden, wohingegen die zweite (untere) Luftfeder über einen Deckel mit einem Befestigungselement in Verbindung steht und mit der Radaufhängung des Fahrzeuges verbunden wird. Wie dies im Einzelnen erfolgt, wird weiter unten ausgeführt. Beim Abrollen der ersten Luftfeder über der zweiten Luftfeder müssen sich die beiden Luftfedern nicht zwangsweise berühren. Die zweite Luftfeder kann bei einem Abrollen der ersten Luftfeder über der zweiten Luftfeder in dieser ersten Luftfeder quasi eintauchen, ohne dass sich die beiden Luftfedern berühren. Der mit der Erfindung erzielte Vorteil ist insbesondere darin zu sehen, dass die erfindungsgemäße Anordnung der Luftfedern sehr kurz und kompakt gebaut werden kann und keinerlei Reibung aufweist, weil auf einen in herkömmlichen Federungs- und Dämpfungsvorrichtungen üblichen Stoßdämpfer verzichtet werden kann. Vorteilhafterweise können die Befestigungspunkte des oberen Deckels und des Befestigungselements so gestaltet sein, dass eine herkömmliche Federungs- und Dämpfungsvorrichtung durch die erfindungsgemäße Federungs- und Dämpfungsvorrichtung ohne große konstruktive Änderungen an der Radaufhängung oder dem Fahrzeugaufbau ersetzt werden kann. Ein weiterer Vorteil der Erfindung ist, dass keine unerwünschte Reibung insbesondere durch Querkräfte erzeugt wird, was sich akustisch positiv bemerkbar macht. Die Federungs- und Dämpfungseigenschaften der erfindungsgemäßen Federungs- und Dämpfungsvorrichtung sind somit frei von unerwünschten Reibungseffekten.

Gemäß einer Weiterbildung der Erfindung nach Anspruch 2 ist vorgesehen, dass eine (untere) Glocke die Außenführungskontur des unteren Rollbalges der zweiten Luftfeder und die Abrollkontur des oberen Rollbalges der ersten Luftfeder bildet. Der Komfort einer pneumatischen Federungs- und Dämpfungsvorrichtung hängt im wesentlichen von der Abrollkontur und der Dicke eines Rollbalges ab. Ein Vorteil der Weiterbildung ist, dass die Abrollkontur des oberen Rollbalges der ersten Luftfeder durch die äußere Formgebung der unteren Glocke frei gewählt und somit komfortoptimiert eingestellt werden kann.
Ein weiterer Vorteil der Weiterbildung ist, dass die Außenführungskontur des unteren Rollbalges der zweiten Luftfeder eine Reduzierung der Dicke dieses unteren Rollbalges auf ein für den Komfort der Federungs- und Dämpfungsvorrichtung ideales Maß erlaubt. Vorteilhafterweise kann die Kontur der inneren Oberfläche der unteren Glocke (Außenführungskontur des unteren Rollbalges der zweiten Luftfeder) unabhängig von der äußeren Formgebung der unteren Glocke (Abrollkontur des oberen Rollbalges der ersten Luftfeder) frei gewählt werden und somit optimal auf den Komfort der Federungs- und Dämpfungsvorrichtung abgestimmt werden.

Gemäß einer Weiterbildung der Erfindung nach Anspruch 3 ist vorgesehen, dass die untere Glocke mit dem Befestigungselement in Verbindung steht. Dieses Befestigungselement ermöglicht die Anbindung der erfindungsgemäßen Federungs- und Dämpfungsvorrichtung an eine herkömmliche Radaufhängung eines Fahrzeuges. Damit sind keine aufwendigen konstruktiven Änderungen an der Radaufhängung eines Fahrzeuges für den Einbau der erfindungsgemäßen Federungs- und Dämpfungsvorrichtung notwendig.

Gemäß einer Weiterbildung der Erfindung nach Anspruch 4 ist vorgesehen, dass eine obere Glocke eine Außenführungskontur des oberen Rollbalges der ersten Luftfeder darstellt. Der Vorteil dieser Weiterbildung ist darin zu sehen, dass die Außenführungskontur des oberen Rollbalges der ersten Luftfeder eine Reduzierung der Dicke dieses oberen Rollbalges auf ein für den Komfort der Federungs- und Dämpfungsvorrichtung ideales Maß und eine freie komfortoptimierte Formgebung dieser Außenführungskontur erlaubt.

Gemäß einer Weiterbildung der Erfindung nach Anspruch 5 ist vorgesehen, dass ein unterer Abrollkolben der zweiten Luftfeder (der die Abrollkontur dieser vorgibt) mit der oberen Glocke in Verbindung steht. Durch diese Anordnung kann, im Vergleich zu einer herkömmlichen Federungs- und Dämpfungsvorrichtung, auf einen Stoßdämpfer, welcher herkömmlicherweise zur Aufnahme und Befestigung des Abrollkolbens einer Luftfeder verwendet wird, und die Verbindung von dem oberen Deckel zum unteren Abrollkolben der zweiten Luftfeder herstellt, verzichtet werden.
Ein weiterer Vorteil der Weiterbildung ist, dass beide Luftfedern in eine Richtung orientiert sein können, was Bauraum spart.

Gemäß einer Weiterbildung der Erfindung nach Anspruch 6 ist vorgesehen, dass ein (oberer) Deckel der ersten Luftfeder und die obere Glocke einteilig ausgeführt sind. Die Reduzierung der Anzahl von Bauteilen ermöglicht eine einfache und kostengünstige Konstruktion der erfindungsgemäßen Federungs- und Dämpfungsvorrichtung. Vorteilhafterweise kann bei dieser Weiterbildung der Erfindung der obere Klemmring des oberen Rollbalgendes der ersten Luftfeder innerhalb der ersten Luftfeder liegen und das obere Rollbalgende an die Innenfläche des Deckels bzw. der Glocke pressen und dort abdichten. Der obere Klemmring der ersten Luftfeder besitzt damit eine von dem Luftdruck der Luftfeder unterstützte Dichtwirkung.

Gemäß einer Weiterbildung der Erfindung nach Anspruch 7 ist vorgesehen, dass die Differenzfläche der Abrollkonturen der beiden Rollbälge als wirksame Fläche klein ist. Eine kleine wirksame Fläche der Abrollkonturen erlaubt die Verwendung von relativ hohem Luftdruck in den Luftfedern, wodurch zum einen eine hohe Traglast und zum anderen in Verbindung mit einem entsprechenden Drosselorgan eine gute Achsdämpfung erreicht wird.

Gemäß einer Weiterbildung der Erfindung nach Anspruch 8 ist vorgesehen, dass der untere Abrollkolben zweiteilig ausgeführt ist und eine Abstimmschale zur Ausbildung der Abrollkontur des unteren Rollbalges enthält. Mit dieser Abstimmschale kann die Abrollkontur des unteren Rollbalges der zweiten Luftfeder auf einfache Art und Weise und ohne weiteren konstruktiven oder fertigungstechnischen Aufwand den jeweiligen Anforderungen an Federung und Dämpfung von unterschiedlichen Fahrzeugtypen mit unterschiedlichen Traglasten angepasst werden.

Gemäß einer Weiterbildung der Erfindung nach Anspruch 9 ist vorgesehen, dass die erste Luftfeder gegenüber der zweiten Luftfeder schwenkbar ist. Eine Verschwenkung der beiden Luftfedern gegeneinander bis zu einem vorbestimmten Winkel α (Alpha) hat keinen nennenswerten Einfluß auf die Funktion der Federung- und Dämpfungsvorrichtung und erzeugt keine zusätzliche Reibung oder Querkräfte, wie dies bei herkömmlichen Federungs- und Dämpfungsvorrichtungen mit Stoßdämpfer und Kolbenstange der Fall ist. Dies hat akustische Vorteile. Der relative weit oben liegende Drehpunkt der Verschwenkung im Zentrum des Deckels der zweiten unteren Luftfeder und damit lange Hebelarm in Bezug auf das untere Befestigungselement lässt eine Verschwenkung der beiden Luftfedern gegeneinander in einem weiten Bereich zu. Ein weiterer Vorteil der Weiterbildung der Erfindung ist, dass kein zusätzliches Schwenklager notwendig ist, da dieses bereits von der vorhandenen Rollfalte der oberen Luftfeder gebildet wird.

Gemäß einer Weiterbildung der Erfindung nach Anspruch 10 ist vorgesehen, dass die Rollbälge der beiden Luftfedern einstückig, insbesondere aus einem Schlauchrollbalg, ausgeführt sind. Mit einem einteiligen Schlauchrollbalg kann der obere Klemmring am Deckel der zweiten (unteren) Luftfeder oder der untere Klemmring der ersten (oberen) Luftfeder am Deckel oder der unteren Glocke der zweiten (unteren) Luftfeder eingespart werden und Kosten reduziert werden. Vorteilhafterweise kann auf eine separate Abdichtung, z.B. durch einen O-Ring, zwischen dem Deckel oder dem oberen Klemmring der zweiten (unteren) Luftfeder und der unteren Glocke verzichtet werden. Der Verzicht auf den O-Ring spart Kosten und Fertigungsaufwand ein und verbessert die Abdichtung der Federungs- und Dämpfungsvorrichtung nach außen.

Ausführungsbeispiele und weitere Vorteile der Erfindung werden im Zusammenhang mit den nachstehenden Figuren erläutert, darin zeigen:
- Fig. 1: Eine pneumatische Federungs- und Dämpfungsvorrichtung,
- Fig. 2: Eine pneumatische Federungs- und Dämpfungsvorrichtung und Wirkflächen dieser.

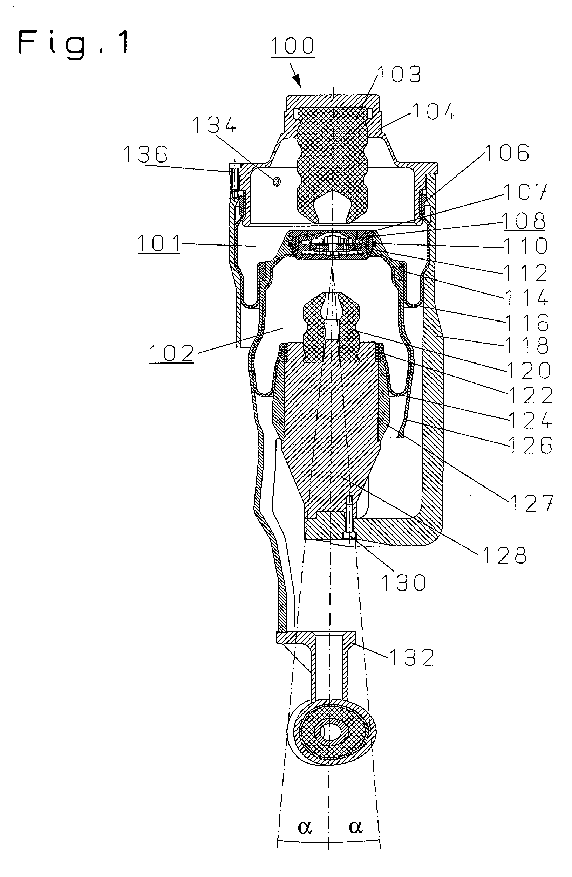

Figur 1 zeigt eine Federungs- und Dämpfungsvorrichtung mit einer ersten Luftfeder 101 und einer zweiten Luftfeder 102. Die erste Luftfeder 101 ist über einen Rollbalg 116 hermetisch dicht nach außen abgeschlossen und rollt unter Ausbildung einer Abrollfalte über der zweiten Luftfeder 102, welche ebenfalls über einen Rollbalg 124 hermetisch dicht nach außen abgeschlossen ist, ab. Die beiden Luftfedern 101, 102 stehen über ein in beiden Richtungen durchströmbares Drosselorgan 108 in Verbindung. Das Drosselorgan 108 weist eine oder mehrere Durchgangsbohrungen mit einem oder mehreren Rückschlagventilen je Durchströmungsrichtung auf und bestimmt damit die mögliche Dämpfungsarbeit der Federungs- und Dämpfungsvorrichtung 100.

Das obere Ende des Rollbalges 116 der ersten Luftfeder 101 ist über einen Klemmring 106 mit einem oberen Deckel 104, welcher eine Zusatzfeder 103 und einen Luftanschluss 134 enthält, dicht verbunden. Die Zusatzfeder 103 stützt sich bei fast vollständiger Einfederung der ersten Luftfeder 101 an einem unteren Deckel 107 und/oder dem Drosselorgan 108 ab und hat eine zusätzliche Federungs- und Dämpfungswirkung zur Folge. Die Abstützung der Zusatzfeder 103 auf dem Drosselorgan 108 kann eine teilweise oder vollständige Abdeckung und damit Schließung der Durchgangsbohrungen oder des Rückschlagventiles des Drosselorgans 108 zur Folge haben und somit die Dämpfung der Federungs- und Dämpfungsvorrichtung in zum Beispiel progressiver Weise verändern.

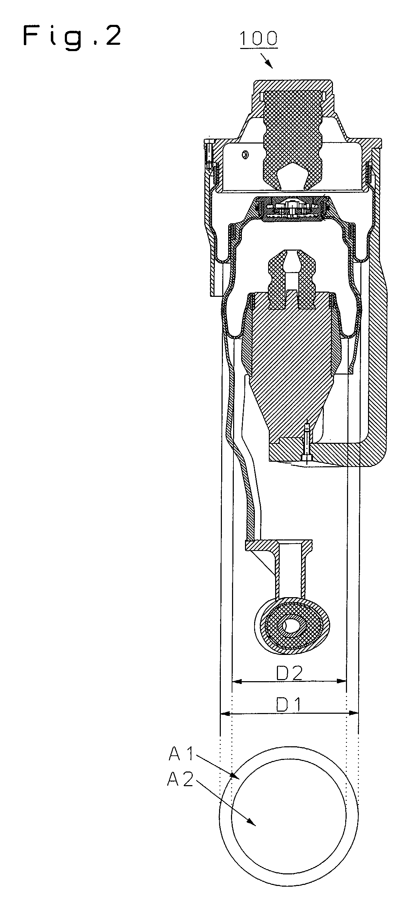

Eine obere Glocke 118 ist an dem Deckel 104 mit einer oder mehreren Schrauben 136 befestigt. Die Verbindung kann aber auch geschweisst oder gepresst oder mit einer anderen üblichen Verbindungstechnik hergestellt werden. Das untere Ende des oberen Rollbalges 116 der ersten Luftfeder 101 ist unter Ausbildung einer Abrollfalte über einen Klemmring 114 dicht mit einem Deckel 107 und/oder einer unteren Glocke 126 verbunden. Die Glocke 126 ist in ihrem unteren, einseitig verlängerten Bereich mit einem Befestigungselement 132 verbunden. Das Befestigungselement 132 in Fig.1 und Fig.2 ist als Befestigungsauge ausgebildet. Es kann aber auch jede andere bekannte Ausführung eines Befestigungselementes benutzt werden. Die Verbindung des Deckels 107 oder der unteren Glocke 126 mit dem Befestigungselement 132 kann mit einem hakenförmigen Steg oder zwei symmetrisch angeordneten Stegen oder einer anderen üblichen Verbindungstechnik hergestellt werden. Die äußere Formgebung der unteren Glocke 126 gibt die Abrollkontur des oberen Rollbalges 116 der ersten Luftfeder 101 und die innere Formgebung, unabhängig von der äußeren Formgebung, gibt die Außenführungskontur des unteren Rollbalges 124 der zweiten Luftfeder 102 vor.

Ein Deckel 107, welcher das Drosselorgan 108 aufnimmt, ist im oberen Bereich der unteren Glocke 126 befestigt. An dem Deckel 107 ist über einen Klemmring 112 das obere Ende des unteren Rollbalges 124 der zweiten Luftfeder 102 dicht verbunden. Die Verbindung zwischen dem Klemmring 112 und der Glocke 126 wird durch einen zwischen den genannten Bauteilen liegenden O-Ring 110 dicht abgeschlossen. Das untere Ende des unteren Rollbalges 124 der zweiten Luftfeder 102 ist unter Ausbildung einer Abrollfalte über einen Klemmring 122 dicht mit einem Abrollkolben 128 verbunden. Der Abrollkolben 128 enthält eine Zusatzfeder 120 und ist zum Beispiel an einem einseitig verlängerten Bereich der oberen Glocke 118 und/oder des oberen Deckels 104 über eine oder mehrere Schrauben 130 befestigt. Die Verbindung kann auch geschweisst oder gepresst oder mit einer anderen üblichen Verbindungstechnik erzeugt werden. Die Verbindung des Deckels 104 und/oder der oberen Glocke 118 mit dem Abrollkolben 128 kann mit einem hakenförmigen Steg oder zwei oder mehr symmetrisch oder unsymmetrisch angeordneten Stegen oder einer anderen üblichen Verbindungstechnik hergestellt werden. Die Zusatzfeder 120 stützt sich bei fast vollständiger Einfederung der zweiten Luftfeder 102 an dem unteren Deckel 107 und/oder dem Drosselorgan 108 ab und hat eine zusätzliche Federungs- und Dämpfungswirkung zur Folge. Die Abstützung der Zusatzfeder 120 auf dem Drosselorgan 108 kann eine teilweise oder vollständige Abdeckung und damit Schließung der Durchgangsbohrungen oder des Rückschlagventiles des Drosselorgans 108 zur Folge haben und somit die Dämpfung der Federungs- und Dämpfungsvorrichtung 100 in zum Beispiel progressiver Weise verändern.

Eine Abstimmschale 127 aus Kunststoff, Gummi oder Metall, welche die Abrollkontur des unteren Rollbalges 124 der zweiten Luftfeder 101 vorgibt, ist auf dem Abrollkolben 128 aufgepresst, geklemmt oder geklebt. Die Luftfeder 101 gegenüber der Luftfeder 102 bzw. die obere Glocke 118 gegenüber der unteren Glocke 126 bzw. der fahrzeugkarosseriefeste Deckel 104 gegenüber dem unteren Befestigungselement 132 sind um einen Winkel α (Alpha) gegeneinander verschwenkbar.

Die Figur 2 zeigt eine Federungs- und Dämpfungsvorrichtung 100 der eingangs genannten Art. Die wirksamen Durchmesser D1, D2 der beiden Luftfedern werden durch eine senkrecht zur vertikalen Achse der Federungs- und Dämpfungsvorrichtung an die untere Abrollfalte anliegende Tangente gebildet. Die wirksame Fläche A1 der ersten Luftfeder ergibt sich aus dem wirksamen Durchmesser D1 dieser und die wirksame Fläche A2 der zweiten Luftfeder ergibt sich aus dem wirksamen Durchmesser D2 dieser. Vorzugsweise ist die Differenzfläche der wirksamen Flächen A1 und A2 klein.

### Bezugszeichenliste

### (ist Teil der Beschreibung)

- 100: Federungs- und/oder Dämpfungsvorrichtung
- 101: Luftfeder
- 102: Luftfeder
- 103: Zusatzfeder
- 104: Deckel
- 106: Klemmring
- 107: Deckel
- 108: Drosselorgan
- 110: O-Ring
- 112: Klemmring
- 114: Klemmring
- 116: Oberer Rollbalg
- 118: Glocke
- 120: Zusatzfeder
- 122: Klemmring
- 124: Unterer Rollbalg
- 126: Glocke
- 127: Abstimmschale
- 128: Unterer Abrollkolben
- 130: Schraube
- 132: Befestigungselement
- 134: Luftanschluss
- 136: Schraube
- α: Winkel (Alpha)
- D1: Wirksamer Durchmesser oberer Rollbalg
- D2: Wirksamer Durchmesser unterer Rollbalg
- A1: Wirksame Fläche oberer Rollbalg
- A2: Wirksame Fläche unterer Rollbalg

## Patentansprüche

1. Pneumatische Federungs- und Dämpfungsvorrichtung (100), insbesondere für Fahrzeuge, welche vorzugsweise im oberen Bereich karosseriefest und im unteren Bereich an einer Radaufhängung befestigbar ist, enthaltend mindestens zwei mit Druckgas gefüllte, über einen Luftanschluss (134) an eine Druckgasquelle anschließbare, hermetisch abgeschlossene und jeweils in ihrem Volumen veränderbare Luftfedern (101, 102), welche jeweils eine von einem Roll- oder Faltenbalg gebildete bewegliche Wand (116, 124) enthalten und jeweils auf einer Abrollkontur abrollen und über ein in zwei Richtungen durchströmbares Drosselorgan (108) in Verbindung stehen, und wobei die Luftfedern (101, 102) übereinander angeordnet sind, und die Abrollkontur der ersten Luftfeder (101) durch die zweite Luftfeder (102) derart vorgegeben wird, dass die erste Luftfeder (101) über der zweiten Luftfeder (102) abrollt, und wobei ein oberer Deckel (104) der ersten Luftfeder (101) über ein Verbindungselement mit einem unteren Abrollkolben (128) der zweiten Luftfeder (102) in Verbindung steht, und ein Deckel (107) der zweiten Luftfeder (102) mit einem Befestigungselement (132) in Verbindung steht,
**dadurch gekennzeichnet, dass** das Verbindungselement des oberen Deckels (104) der ersten Luftfeder (101) mit dem Abrollkolben (128) der zweiten Luftfeder (102) außerhalb der beiden Luftfedern (101, 102) verläuft.

2. Vorrichtung nach Anspruch 1, **dadurch gekennzeichnet, dass** eine untere Glocke (126) vorhanden ist, welche eine Außenführungskontur des unteren Rollbalges (124) der zweiten Luftfeder (102) und die Abrollkontur des oberen Rollbalges (116) der ersten Luftfeder (101) bildet.

3. Vorrichtung nach einem oder mehreren der vorherigen Ansprüche, **dadurch gekennzeichnet, dass** die untere Glocke (126) mit dem Befestigungselement (132) in Verbindung steht.

4. Vorrichtung nach einem oder mehreren der vorherigen Ansprüche, **dadurch gekennzeichnet, dass** eine obere Glocke (118) eine Außenführungskontur des oberen Rollbalges (116) der ersten Luftfeder (101) darstellt.

5. Vorrichtung nach einem oder mehreren der vorherigen Ansprüche, **dadurch gekennzeichnet, dass** ein unterer Abrollkolben (128) der zweiten Luftfeder (102) mit der oberen Glocke (118) in Verbindung steht.

6. Vorrichtung nach einem oder mehreren der vorherigen Ansprüche, **dadurch gekennzeichnet, dass** ein Deckel (104) der ersten Luftfeder (101) und die obere Glocke (118) einteilig ausgeführt sind.

7. Vorrichtung nach einem oder mehreren der vorherigen Ansprüche, **dadurch gekennzeichnet, dass** die Differenzfläche der Abrollkonturen der beiden Rollbälge (116, 124) als wirksame Fläche klein ist.

8. Vorrichtung nach einem oder mehreren der vorherigen Ansprüche, **dadurch gekennzeichnet, dass** der untere Abrollkolben (128) zweiteilig ausgeführt ist und eine Abstimmschale (127) zur Ausbildung der Abrollkontur des unteren Rollbalges (124) enthält.

9. Vorrichtung nach einem oder mehreren der vorherigen Ansprüche, **dadurch gekennzeichnet, dass** die erste Luftfeder (101) gegenüber der zweiten Luftfeder (102) schwenkbar ist.

10. Vorrichtung nach einem oder mehreren der vorherigen Ansprüche, **dadurch gekennzeichnet, dass** die Rollbälge (116, 124) der beiden Luftfedern (101, 102) einstückig, insbesondere aus einem Schlauchrollbalg, ausgeführt sind.
